# EUROPÄISCHE PATENTANMELDUNG

(11) **EP 2 798 964 A1**
(43) Veröffentlichungstag der Anmeldung: **05.11.2014**
(21) Anmeldenummer: 14166601.6
(22) Anmeldetag: 30.04.2014
(51) Int. Cl.: A23L 1/31, A23L 1/314, A23L 1/317, A23L 1/318, A23L 1/325, A23L 1/05, A22C 13/00, A23L 1/227, A23L 1/231, A23L 1/27, A23C 19/00, A23C 19/09, A23C 19/16

(54) **Lebensmittelbräunungsbeschichtung sowie damit beschichtete Folie und Hülle**

(30) Priorität: 30.04.2013 DE 202013101887 U
(71) Anmelder: PlanetPac GmbH, 22885 Barsbüttel (DE)
(72) Erfinder: Drews, Dirk, 21465 Wentorf bei Hamburg (DE)
(74) Vertreter: Stork Bamberger

(57) **Zusammenfassung**

Eine Lebensmittelbräunungsbeschichtung für proteinhaltige Lebensmittel besteht aus mindestens einem Reduktionsmittel, gewählt aus der Gruppe bestehend aus reduzierenden Zuckern und reduzierenden Zucker enthaltenden Kohlenhydratgemischen, sowie mindestens einem Reaktionsvermittler, gewählt aus der Gruppe bestehend aus Säureregulatoren, Komplexbildnern, Antioxidationsmitteln, Emulgatoren, Wasserbinder und Stabilisatoren. Eine solche Lebensmittelbräunungsbeschichtung ermöglicht eine Bräunung proteinhaltiger Lebensmittel bei der Verwendung luftundurchlässiger Folien oder Hüllen.

## Beschreibung

Die vorliegende Erfindung betrifft eine Lebensmittelbräunungsbeschichtung für proteinhaltige Lebensmittel. Solche proteinhaltigen Lebensmittel sind zum Beispiel Fleisch- und Wurstwaren, Fisch oder Käse. Ferner betrifft die Erfindung Folien und Hüllen, die mit einer solchen Lebensmittelbräunungsbeschichtung beschichtet sind und die Verwendung der Lebensmittelbräunungsbeschichtung sowie der Folien und Hüllen zur Bräunung proteinhaltiger Lebensmittel.

Lebensmittelbräunungsbeschichtungen werden eingesetzt, um Lebensmitteln wie insbesondere Fleisch- und Wurstwaren, Fisch oder Käse eine bräunliche Farbe zu verleihen, um das Produkt für den Konsumenten attraktiver zu machen. Für die Bräunung werden zum einen Lebensmittelfarbstoffe eingesetzt. Solche Lebensmittelzusatzstoffe sind deklarationspflichtig und oft unerwünscht, da sie im Verdacht stehen, trotz Zulassung nicht frei von unerwünschten Nebenwirkungen zu sein und zum Beispiel Allergien auszulösen.

Eine andere Möglichkeit zur Bräunung bzw. Braunfärbung eiweißhaltiger Lebensmittel ist die Nutzung der sog. Maillard-Reaktion. Bei dieser nicht-enzymatischen Bräunungsreaktion, die tatsächlich nicht eine einzige Reaktion sondern eine komplexe Vielzahl parallel und nacheinander ablaufender Reaktionen ist, werden die Eiweiße in Fleisch-/Wurstwaren bzw. Fisch oder Käse mit reduzierenden Verbindungen unter Hitzeeinwirkung zu Melanoidinen umgewandelt, geschmacksintensiven Verbindungen, die für das typische Aroma und die Färbung von eiweißreichen gerösteten, gebackenen oder gebratenen Lebensmitteln verantwortlich sind. Als reduzierende Verbindung kommen in der Lebensmittelherstellung üblicherweise Zucker wie Dextrose oder Maltodextrin zum Einsatz. Die Maillard-Reaktion verzögert auch den Verderb, da die Reaktionsprodukte wie das Pronyl-Lysin Luftsauerstoff binden.

Solche bräunenden Beschichtungen können durch Aufstreichen oder Aufsprühen auf das Lebensmittel aufgebracht werden. Eine besonders vorteilhafte Form der Aufbringung ist mittels Transfer von einer Folie. Die Beschichtung ist auf eine Folie oder Hülle aufgebracht. Diese Folie wird auf das z.B. Fleisch gelegt oder eine Hülle wird mit der Wurstware gefüllt; das Produkt wird erhitzt und die Braunfärbung tritt ein.

Will man eine Braunfärbung durch Maillard-Reaktion unter Verwendung einer Zucker enthaltenden Beschichtung erreichen, so haben Versuche gezeigt, dass die Anwesenheit von Sauerstoff erforderlich ist, damit die gewünschte Braunfärbung auftritt. Werden luftundurchlässige Folien oder Hüllen verwendet, tritt selbst bei erhöhter Wärmezufuhr praktisch keine Braunfärbung ein. Damit ist die Verwendung von Folien oder Hüllen, die im Wesentlichen gasundurchlässig sind, nicht möglich. Solche gas- und wasserdampfundurchlässigen Folien werden bei der Lebensmittelherstellung bevorzugt eingesetzt, da sie den Wasser- und damit den Gewichtsverlust der Produkte während der Herstellung, der bei Erhitzung auftritt, minimieren.

Es wäre daher wünschenswert, eine Beschichtung für eiweißhaltige Lebensmittel zu haben, die eine Maillard-Reaktion ohne Sauerstoffzufuhr ermöglicht. Aufgabe der vorliegenden Erfindung war es daher, eine Beschichtung bereitzustellen, die eine Braunfärbung von eiweißhaltigen Lebensmitteln ermöglicht, ohne dass deklarationspflichtige Lebensmittelfarbstoffe verwendet werden müssen, wobei ferner gas- und wasserdampfundurchlässige bzw. im Wesentlichen undurchlässige Folien oder Hüllen zum Einsatz kommen können.

Überraschender Weise wurde gefunden, dass eine Braunfärbung proteinhaltiger Lebensmittel auch ohne Sauerstoffzufuhr, d.h. z.B. bei Verwendung gasundurchlässiger Folien oder Hüllen, möglich ist, wenn eine Lebensmittelbräunungsbeschichtung für proteinhaltige Lebensmittel, also eine Beschichtung zur Bräunung oder Braunfärbung eiweißhaltiger Lebensmittel, bestehend aus mindestens einem Reduktionsmittel, gewählt aus der Gruppe bestehend aus reduzierenden Zuckern und reduzierenden Zucker enthaltenden Kohlenhydratgemischen, sowie mindestens einem Reaktionsvermittler, gewählt aus der Gruppe bestehend aus Säureregulatoren, Komplexbildnern, Antioxidationsmitteln, Emulgatoren, Wasserbindern und Stabilisatoren, verwendet wird.

Unter Lebensmittelbräunungsbeschichtung wird dabei eine Masse verstanden, die zur Beschichtung entweder direkt des zu bräunenden Lebensmittels oder zur Beschichtung indirekt beispielsweise einer Transferfolie eingesetzt wird.

Mit dieser Beschichtung wird eine gleichmäßige Färbung der Lebensmitteloberfläche, die hinsichtlich des Brauntones einstellbar ist, erreicht. Besonders vorteilhaft ist dabei, dass mit der erfindungsgemäßen Beschichtung nur vergleichsweise geringe Temperaturen (T ≤ 100°C, vorzugsweise ≤ 90°C und besonders bevorzugt ≤ 80°C) erforderlich sind, um den Bräunungsprozess durchzuführen. Dies hat den großen Vorteil, dass unerwünschte Nebenprodukte, die bei höheren Temperaturen entstehen, wie z.B. Acrylamid, vermieden werden können. Ferner kann die Bräunung bereits bei der handelsüblichen Gartemperatur von 78°C erreicht werden.

Eine solche Beschichtung ist frei von deklarierungspflichtigen Farbstoffen, was die Akzeptanz der Beschichtung sowie des fertigen Lebensmittelproduktes beim Verbraucher maßgeblich erhöhen dürfte. Eine Bräunung mit natürlichem Rauch wird möglich, die bislang bei luftundurchlässigen Folien nicht möglich war.

Dabei können als Säureregulatoren Di-, Tri- und Polyphosphate, Carbonate, Acetate, Dicarbonsäuren oder Hydroxysäuren und ihre zugehörigen Salze oder Sulfate verwendet werden.

Als Komplexbildner kommen beispielsweise Phosphate, Citrate, Ascorbate, Dicarbonsäuren oder Hydroxysäuren zum Einsatz.

Als Antioxidationsmittel können Ascorbinsäure oder Isoascorbinsäure und ihre jeweiligen Salze, Carnosol, Carnosolsäure sowie Citronensäure, Weinsäure, Phosphorsäure, Ethylendiamintetraessigsäure und ihre jeweiligen Salze dienen.

Geeignete Emulgatoren sind insbesondere Lecithine sowie Mono- und Diglyceride von Speisefettsäuren.

Wasserbinder können z.B. Tri- oder Polyphosphate sein.

Besonders geeignet als Reaktionsvermittler sind Acetate oder Di-, Tri- oder Polyphosphate, insbesondere ein Triphosphat, insbesondere Pentanatriumtriphosphat oder Pentakaliumtriphosphat. Sie bewirken eine besonders gleichmäßige goldbraune Färbung des zu bräunenden Lebensmittels, wobei der Braunton durch die Menge an zugesetztem Reaktionsvermittler, das Verhältnis von Reaktionsvermittler zu Reduktionsmittel, die Behandlungslänge und/oder die Temperatur eingestellt werden kann.

Besonders vorteilhaft ist die Verwendung von Phosphaten auch vor dem Hintergrund, dass Phosphate in den meisten Fällen als Zusatzstoffe in Fleisch- oder Wurstwaren enthalten sind. Damit sind Phosphate bereits auf den Etiketten deklariert und es entfällt das Erfordernis, die Liste der Zutaten/Inhaltsstoffe des fertigen Lebensmittelproduktes um eine zusätzliche E-Nummer zu erweitern.

Die Phosphate fungieren als Reaktionsvermittler in Verbindung mit handelsüblichen Reduktionsmitteln (Bräunungsprodukten), die insbesondere als innenliegende Beschichtung auf gas- und wasserdampfundurchlässigen Folien oder Hüllen angewandt werden kann. Darüber hinaus bindet das Phosphat auch noch das Wasser zwischen der Beschichtung und der Fleischoberfläche, ohne dass es zu einer Geleebildung kommen würde.

Als Reduktionsmittel sind reduzierende Zucker, d.h. solche Zucker, die eine freie Aldehydgruppe besitzen, besonders geeignet. Dabei sind insbesondere Fructose, Gallactose, Maltose und Lactose und allen voran Glucose zu nennen. Als Kohlenhydratgemisch, das reduzierenden Zucker enthält, ist insbesondere Maltodextrin besonders geeignet.

Darüber hinaus kann einer der Bestandteil der erfindungsgemäße Beschichtung zusätzlich geräuchert sein oder die Beschichtung kann zusätzlich mit geräucherten natürlichen Substanzen, die z.B. aus Zuckerstoffen wie Dextrose oder Maltodextrin bestehen, versehen sein, so das neben der Bräunung auch noch ein natürlicher Rauchgeschmack erzielt wird. Auch hier werden vorzugsweise natürlich geräucherte Substanzen wie geräuchertes Maltodextrin anstelle von Raucharomen eingesetzt, so dass die entsprechende Deklaration "Rauch" anstelle von "Raucharoma" lauten kann, was die Akzeptanz des Produktes wiederum stark erhöhen dürfte.

Vorzugsweise ist der Beschichtung zusätzlich ein Verdicker zugesetzt, der die Verarbeitbarkeit der Beschichtung, insbesondere das Aufbringen der Beschichtung auf das Lebensmittel oder auf eine Transferfolie, erleichtert. Als Verdicker, die auch als Verdickungsmittel oder Geliermittel bezeichnet werden, kommen Alginate, Xanthan, CMC (Carboxymethylcellulose), Pektin, Agar-Agar, Carragen, Johannisbrotkernmehl, Guarkernmehl, Hydroxypropylcellulose oder Tarakernmehl zum Einsatz, wobei Xanthan und CMC besonders bevorzugt sind.

Vorzugsweise enthält die erfindungsgemäße Beschichtung abgesehen von Wasser neben den vorstehend angegebenen Substanzen, d.h. Reduktionsmittel und Reaktionsvermittler sowie gegebenenfalls geräucherte Verbindung und/oder Verdicker, keine weiteren Bestandteile.

Ferner betrifft die Erfindung Folien und Hüllen, die mit einer solchen Lebensmittelbräunungsbeschichtung beschichtet sind.

Viele derartige Verpackungsfolien und oder Därme ob durchlässig oder undurchlässig mit solchen funktionalen innenliegenden Beschichtungen sind hinreichend bekannt, jedoch muss bei diesen Folien immer eine braune Lebensmittelfarbe und/oder Raucharoma bzw. Aroma deklariert werden. Aus diesem Grund war es erstrebenswert, eine Verpackungsfolie oder Hülle zu entwickeln, welche in der Lage ist, ohne Farben und/oder Raucharomen ohne nennenswerte Gewichtsverluste während des Garens, der Lagerung und des Transportes eine gleichmäßige einstellbare Bräunung mit oder ohne natürlichen Rauch auf die Lebensmitteloberfläche zu übertragen. Somit ist das Ziel einer "Clean Label" Deklaration der darin hergestellten Lebensmittel möglich. Darüber hinaus soll die Verpackungsfolie oder die Verpackungshülle dafür Sorge tragen, die Gewichtsverluste während des Garens, der Lagerung und dem Transport so gering wie möglich zu halten.

Diese Aufgabe wird mit einer Folie bzw. einer Umhüllung, die mit einer erfindungsgemäßen Lebensmittelbräunungsbeschichtung beschichtet ist, gelöst.

Vorzugsweise kommen dabei Folien oder Hüllen zum Einsatz, die eine Sauerstoffdurchlässigkeit ≤ 1000 cm³/m² d bar, vorzugsweise ≤ 10 cm³/m² d bar, besonders bevorzugt ≤ 1 cm³/m² d bar, und eine Wasserdampfdurchlässigkeit ≤ 100 cm³/m² d, vorzugsweise ≤ 10 cm³/m² d, besonders bevorzugt ≤ 1 cm³/m² d aufweisen.

Alle in der Anmeldung angegebenen Werte für die Sauerstoff- bzw. Wasserdampfdurchlässigkeit beziehen sich dabei auf eine Temperatur von 23°C; die angegebenen Werte für die Wasserdampfdurchlässigkeit beziehen sich auf 85% relative Feuchte.

Vorzugsweise besteht die Folie oder die Hülle aus Kunststoffdarm. Dabei kommen uPA-Hüllen (nicht orientierte Polymerstruktur) oder oPA-Hüllen (orientierte Polymerstruktur) zum Einsatz. Es können einschichtige oder mehrschichtige Hüllen bzw. Folien oder solche mit Verbundaufbau verwendet werden. Als Materialien kommen insbesondere Polyamide oder Co-Polyamide, Polyethylen, Polypropylen Polyester, Polyvinylidenchlorid (PVDC) zum Einsatz, wobei Polyamide, Polyethylen und Polypropylen besonders bevorzugt sind. Bei einem Verbundaufbau werden die Schichten vorzugsweise mit einem oder mehreren Haftvermittler(n) verbunden.

Besonders bevorzugt werden mehrschichtige Verbundfolien oder Verbundhüllen aus mehreren Schichten Polyamid, Polypropylen oder Polyethylen oder aus einer Kombination aus Polyamid und Polyethylen verwendet. Dabei kann eine gerade Zahl oder eine ungerade Zahl an Schichten in der Folie oder Hülle enthalten sein, wobei eine ungerade Zahl, vorzugsweise drei, besonders bevorzugt ist. Das Polyamid dient als Sauerstoffbarriere, Polyethylen oder Polypropylen als Wasserdampfbarriere. Wenn die Verbundfolie oder die Verbundhülle sowohl Polyamid- wie auch Polyethylen- und/oder Polypropylenschichten enthält, ist die äußere Schicht vorzugsweise eine Polyamidschicht.

Vorzugsweise werden die Folien oder Hüllen während Extrusion verreckt. Besonders geeignet sind biaxial verstreckte Folien oder Hüllen. Durch die Verstreckung kommt es bei der späteren Verarbeitung zu einem Rückschrumpf, was für das fertige Produkt von Vorteil ist.

Auch die Verwendung einer Aluminium-laminierten Verbundfolie oder -hülle ist möglich.

Derzeit handelsübliche Barrieredärme, die eine Durchlässigkeit von ca. 7-8 cm³/m² d aufweisen, können für die vorliegende Erfindung problemlos verwendet werden.

Eine solche Hülle als Flachfolie kann auch zum Einlegen in eine luftdichte Form oder einen Vakuumbeutel verwendet werden, in die das zu bräunende Lebensmittel, also z.B. Fleisch, eingefüllt und thermisch behandelt wird. Somit können auch partielle Bräunungen auf der Lebensmitteloberfläche erzielt werden. Ferner kann die Erfindung als fertiger Vakuumbeutel innenliegend mit der erfindungsgemäßen Bräunungsbeschichtung ausgestattet ausgebildet sein.

Die Hülle bzw. die Folie werden derart verwendet, dass durch Anlage an das Lebensmittel mit thermischer Behandlung die auf die Folie/Hülle aufgebrachte Beschichtung auf die Lebensmitteloberfläche übergeht, so dass eine gleichmäßige einstellbare Bräunung, die bekannte Maillard Reaktion mit oder ohne Rauch ohne jegliche Farbstoffe und ohne nennenswerte Gewichtsverluste während der Garens, der Lagerung und dem Transport erzielt wird.

Die erfindungsgemäße Beschichtung ist vor ihrer Anwendung üblicherweise weißlich. Im Falle einer geräucherten Beschichtung kann sie einen ganz schwachen Braunton aufweisen. Die eigentliche Braunfärbung tritt jedoch erst in der Anwendung, d.h. bei Erhitzung auf dem Lebensmittelprodukt auf. Dies unterscheidet die erfindungsgemäße Beschichtung von denjenigen im Stand der Technik, die mit braunen Farbstoffen wie z.B. Zuckercouleur gefärbt sind.

Die vorliegende Erfindung betrifft schließlich die Verwendung der erfindungsgemäßen Lebensmittelbräunungsbeschichtung bzw. einer mit dieser Beschichtung beschichteten Folie oder Hülle zur Braunfärbung eiweißhaltiger Lebensmittel. Dabei ist die Bräunung unter Ausschluss der Sauerstoffzufuhr möglich. Eine Bräunung tritt trotz Verwendung einer luftundurchlässigen und/oder wasserdampfundurchlässigen Hülle oder Folie ein. Es kann eine natürlich Bräunung ohne die Verwendung künstlicher Farbstoffe erreicht werden.

Der Bräunungsprozess wird vorzugsweise bei Temperaturen ≤ 100°C, insbesondere ≤ 90°C, besonders bevorzugt ≤ 80°C durchgeführt.

Die Vorteile der vorliegenden Erfindung werden durch die nachfolgenden Beispiele veranschaulicht:

Reduzierende Zucker (reaktive Bräunungssubstanzen) sind in pulvriger oder flüssiger Form unter anderem bei der Fa. Red Arrow erhältlich.
1. SMOKE MALTEX GF (Bräunungsprodukt) wurde in einer 15%igen Lösung mit Wasser angesetzt:
   Diese Lösung wurde mit einem Nassgewicht von ca. 120gr per m² auf eine Gas-und Wasserdampfdurchlässige Hülle (z.B: handelsüblicher Faserdarm) innenliegend beschichtet, mit getumbelten Fleisch/Wurstbrät stramm befüllt und für ca. 3 Stunden bei ca. 78° C gegart.
   **Ergebnis: goldgelbe Färbung der Fleischoberfläche mit einem Gewichtsverlust von ca. 7%.**
2. SMOKE MALTEX GF (Bräunungsprodukt) wurde in einer 15%igen Lösung mit Wasser angesetzt:
   Diese Lösung wurde mit einem Nassgewicht von ca. 120gr per m² auf eine Gas-und Wasserdampfundurchlässige Hülle (z.B: handelsüblicher mehrlagiger Kunststoffdarm mit hoher Barriereigenschaft) innenliegend beschichtet und mit getumbelten Fleisch/Wurstbrät stramm befüllt und für ca. 3 Stunden bei 78°C gegart.
   **Ergebnis: keine signifikante Färbung der Fleischoberfläche ohne nennenswerten Gewichtsverlust.**
3. SMOKE MALTEX GF (Bräunungsprodukt) wurde in einer 15%igen Lösung mit Wasser und 5% Triphosphat angesetzt: Diese Lösung wurde mit einem Nassgewicht von ca. 120gr. per m² auf eine gas- und wasserdampfundurchlässige Hülle (z.B: handelsüblicher mehrlagiger Kunststoffdarm mit hoher Barriereeigenschaft) innenliegend beschichtet und getrocknet. Danach mit getumbelten Fleisch/Wurstbrät stramm befüllt und für ca. 3 Stunden bei 78°C gegart.
   **Ergebnis: schöne goldgelbe Färbung der Fleischoberfläche ohne nennenswerte Gewichtsverluste.**
4. SMOKE MALTEX GF (Bräunungsprodukt) wurde in einer 15%igen Lösung mit Wasser und 5% Triphosphat sowie 4% CMC angesetzt: Diese Lösung wurde mit einem Nassgewicht von ca. 120gr. per m² auf eine gas- und wasserdampfundurchlässige Hülle (z.B: handelsüblicher mehrlagiger Kunststoffdarm mit hoher Barriereeigenschaft) innenliegend beschichtet und getrocknet. Danach mit getumbelten Fleisch/Wurstbrät stramm befüllt und für ca. 3 Stunden bei 78°C gegart.
   **Ergebnis: schöne goldgelbe Färbung der Fleischoberfläche ohne nennenswerte Gewichtsverluste bei leicht zu applizierender Beschichtung**

### Schlussfolgerung:

Versuch 1 zeigt den Stand der Technik. Aufgrund der Sauerstoffzufuhr der durchlässigen Hülle in Verbindung mit der innenliegenden MALTEX GF Beschichtung wird die Bräunung der Fleischoberfläche aktiviert bzw. beschleunigt, somit ist eine schöne goldgelbe Bräunung, allerdings mit entsprechenden hohen Gewichtsverlusten zu erkennen. Solche Bräunungsprodukte werden auch durch einfaches Aufsprühen oder Pinseln auf die rohe Fleischoberfläche bereits genutzt.

Versuch 2 zeigt, dass in einer gas-und wasserdampfundurchlässigen Hülle in Verbindung mit der innenliegenden MALTEX GF Beschichtung keine schöne goldgelbe Bräunung der Fleischoberfläche stattfindet, weil vermutlich die Sauerstoffzufuhr fehlt.

Versuche 3 und 4 zeigen das Ergebnis bei Verwendung einer erfindungsgemäßen Bräunungsbeschichtung. Durch die Zugabe von Triphosphat ist eine schöne goldgelbe Bräunung der Fleischoberfläche entstanden, obwohl keine Sauerstoffzufuhr (Versuch 2) vorhanden war. Die Dosierung des Bräunungsproduktes ist beispielhaft. Auch geringere Dosierungen sollten ausreichend sein, um eine gewünschte Bräunung zu erreichen. Ferner kann über die Dosierung die Intensität des Brauntons gesteuert werden.

Wie vorstehend gezeigt, können mit der erfindungsgemäßen Verpackungsfolie auf der Oberfläche des darin befindlichen Lebensmittels gleichmäßige einstellbare Brauntöne mit oder ohne natürlichen Rauch ohne Deklaration diverser handelsüblichen Lebensmittelfarben und/oder diverser Raucharomen erzielt werden. Es gelingt somit, ein Produkt zur Verfügung zu stellen, das "etikettenkonform" ist, d.h. das keiner Deklaration zusätzlicher Lebensmittelzusatzstoffe bedarf. Die einzigen anzugebenden Lebensmittelzusatzstoffe sind also solche, die ohnehin im fertigen Lebensmittelprodukt enthalten sind. Die Deklaration entspricht somit derjenigen des traditionell hergestellten Produktes.

Für die Verankerung der besagten Beschichtung auf einer Gas-und oder Wasserdampfundurchlässigen Folie oder Hülle gibt es folgende Möglichkeiten:
a. Saugfähiges innenliegendes Vlies
b. Corona Behandlung der Innenlage
c. Saugfähige/Wasseraufnehmende innenliegende Kunststofffolie von einer mehrlagigen Verbundfolie
d. Während der Extrusion einmischen

Punkt a. ist in der EP-0992194B1 beschrieben, jedoch ist dieses innenliegende Vlies mit Farben- und/oder Aromastoffen getränkt, so dass Farben- und/oder Aromastoffe deklariert werden müssen. Punkt b. und d. sind auch in verschiedenen Patentschriften beschrieben, jedoch nicht in Verbindung mit Bräunungsprodukten, welche die Maillard Reaktion aktivieren bzw. beschleunigen.

## Patentansprüche

1. Lebensmittelbräunungsbeschichtung für proteinhaltige Lebensmittel bestehend aus mindestens einem Reduktionsmittel, gewählt aus der Gruppe bestehend aus reduzierenden Zuckern und reduzierenden Zucker enthaltenden Kohlenhydratgemischen, sowie mindestens einem Reaktionsvermittler, gewählt aus der Gruppe bestehend aus Säureregulatoren, Komplexbildnern, Antioxidationsmitteln, Emulgatoren, Wasserbinder und Stabilisatoren.

2. Lebensmittelbräunungsbeschichtung nach Anspruch 1, **dadurch gekennzeichnet, dass** der Reaktionsvermittler ein Acetat oder ein Di-, Tri- oder Polyphosphat, insbesondere ein Triphosphat, insbesondere Pentanatriumtriphosphat oder Pentakaliumtriphosphat, ist.

3. Lebensmittelbräunungsbeschichtung nach Anspruch 1 oder 2, **dadurch gekennzeichnet, dass** das Reduktionsmittel Glucose oder Maltodextrin ist.

4. Lebensmittelbräunungsbeschichtung nach einem der Ansprüche 1 bis 3, **dadurch gekennzeichnet, dass** einer der Bestandteile der Beschichtung geräuchert ist oder dass die Beschichtung einen weiteren Bestandteil aufweist, der geräuchert ist.

5. Lebensmittelbräunungsbeschichtung nach einem der Ansprüche 1 bis 4, **dadurch gekennzeichnet, dass** die Beschichtung zusätzlich einen Verdicker, insbesondere CMC oder Xanthan, enthält.

6. Verpackungsfolie beschichtet mit der Lebensmittelbräunungsbeschichtung nach einem der Ansprüche 1 bis 5.

7. Verpackungsfolie nach Anspruch 6, **dadurch gekennzeichnet, dass** die Folie eine Sauerstoffdurchlässigkeit ≤ 1000 cm³/m² d bar, vorzugsweise ≤ 10 cm³/m² d bar, besonders bevorzugt ≤ 1 cm³/m² d bar, und eine Wasserdampfdurchlässigkeit ≤ 100 cm³/m² d, vorzugsweise ≤ 10 cm³/m² d, besonders bevorzugt ≤ 1 cm³/m² d aufweist.

8. Verpackungshülle innenliegend beschichtet mit der Lebensmittelbräunungsbeschichtung nach einem der Ansprüche 1 bis 5.

9. Verpackungshülle nach Anspruch 8, **dadurch gekennzeichnet, dass** die Hülle eine Sauerstoffdurchlässigkeit ≤ 1000 cm³/m² d bar, vorzugsweise ≤ 10 cm³/m² d bar, besonders bevorzugt ≤ 1 cm³/m² d bar, und eine Wasserdampfdurchlässigkeit ≤ 100 cm³/m² d, vorzugsweise ≤ 10 cm³/m² d, besonders bevorzugt ≤ 1 cm³/m² d aufweist.

10. Verpackungsfolie oder Verpackungshülle nach einem der Ansprüche 6 bis 9, **dadurch gekennzeichnet, dass** sie aus mindestens einer Schicht besteht, wobei das Material der Schicht oder der Schichten ausgewählt ist aus Polyamiden, Polypropylen und Polyethylen.

11. Verpackungsfolie oder Verpackungshülle nach Anspruch 10, **dadurch gekennzeichnet, dass** sie aus einem Verbundmaterial aus mindestens drei Schichten besteht, wobei mindestens eine Schicht eine Polyamidschicht ist.

12. Verwendung einer Verpackungshülle oder Verpackungsfolie nach einem der Ansprüche 6 bis 11 zur Braunfärbung eiweißhaltiger Lebensmittel.

13. Verwendung der Lebensmittelbräunungsbeschichtung nach einem der Ansprüche 1 bis 5 zur Braunfärbung eiweißhaltiger Lebensmittel unter Ausschluss der Sauerstoffzufuhr.

14. Verwendung nach Anspruch 12 oder 13, **dadurch gekennzeichnet, dass** der Bräunungsprozess bei Temperaturen ≤ 100°C, insbesondere ≤ 90°C, vorzugsweise ≤ 80°C durchgeführt wird.
